# EUROPEAN PATENT APPLICATION

(11) **EP 3 912 835 A1**
(43) Date of publication of application: **24.11.2021**
(21) Application number: 20176042.8
(22) Date of filing: 22.05.2020
(51) Int. Cl.: B60G 11/04, B60G 9/00, B60B 35/00, B60B 35/04

(54) **INTERCONNECTED REAR SUSPENSION, IN PARTICULAR RIGID AXLE SUSPENSION, FOR A MOTOR VEHICLE**

(71) Applicant: FCA Italy S.p.A., 10135 Torino (IT)
(72) Inventor: CROSETTI, Andrea, 10135 TORINO (IT)
(74) Representative: Lovino, Paolo

(57) **Abstract**

An interconnected rear suspension, in particular a rigid-axle suspension, is provided with a beam (2), which extends along a transverse axis (3) and has two opposite ends (4), which are designed to be coupled to a motor vehicle body by means of respective spring elements and support respective hubs (7) for the wheels (17); the suspension (1) is further provided with two support and connection members (8), which couple the hubs (7) to the ends (4) of the beam (2) so as to allow the hubs (7) to rotate about respective rotation axes (9); the support and connection members (8) are mounted on the ends (4) of the beam (2) so as to oscillate about respective oscillation axes (20), which are radially spaced apart from the rotation axes (9).

## Description

The invention relates to an interconnected rear suspension for a motor vehicle and, in particular, to a suspension of the type comprising a rigid axle coupled to a motor vehicle body by means of springs.

As it is known, a rigid-axle rear suspension comprises a beam, which is usually defined by a tube and whose side ends support respective hubs for the wheels and are coupled to the motor vehicle body by means of respective springs and respective shock absorbers. Generally speaking, the springs are leaf springs and, generally speaking, the ends of the beam do not need arms or other mechanical elements to be connected to the body. Some solutions of this type entail anyway the use of a Panhard rod to limit the lateral movements of the beam.

In known solutions of the type described above, the wheels are coaxial to the beam. In this way, the axle shafts of the transmission can be housed in the beam itself in order to operate the two rear wheels, in case they are drive wheels.

In case the two rear wheels are not drive wheels, theoretically there is a greater freedom in the design of the suspension. Known solution need to be perfected in order to improve the behaviour of the suspension and, hence, the comfort of the driver as well as of passengers during the absorption of road irregularities, in particular when the rear wheels have to get onto a step (for example, while parking or during a manoeuvre) or drive past a speed bump.

The object of the invention is to provide an interconnected rear suspension, in particular a rigid-axle suspension, for a motor vehicle, which can fulfil the need discussed above in a simple and economic fashion.

According to the invention, there is provided an interconnected rear suspension, in particular a rigid-axle suspension, for a motor vehicle according to claim 1.

The invention will now be described with reference to the accompanying drawings, which show a non-limiting embodiment thereof, wherein:
- figure 1 is a perspective view of a preferred embodiment of the interconnected rear suspension for a motor vehicle according to the invention;
- figure 2 shows a detail of figure 1 on a larger scale;
- figure 3 shows the detail of figure 2 from a different point of view and with a detail shown in cross section and on an even larger scale;
- figure 4 shows, again, the detail of figures 2 and 3 from a further point of view; and
- figure 5 shows the same detail of figures 2 and 3 with sectional parts, which are obtained according to a vertical section plane on which the rotation axis of a wheel lies.

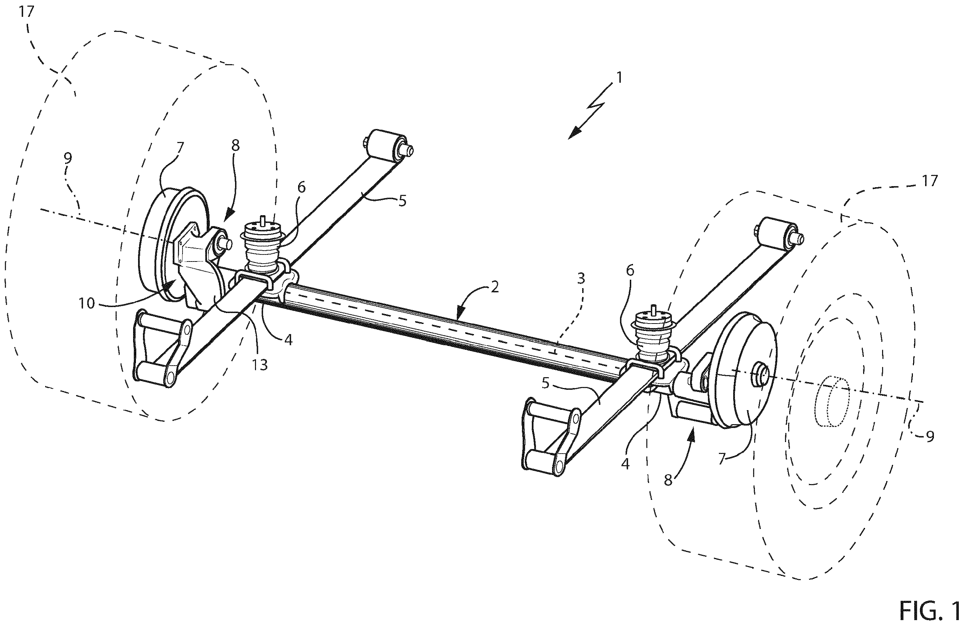

In figure 1, number 1 indicates an interconnected rear suspension, in particular a rigid-axle suspension, for a motor vehicle.

The suspension 1 comprises a beam 2, which extends along a transverse axis 3, is designed and manufactured so as to be rigid when subjected to bending and twisting and has two side ends 4, which are opposite and coaxial to one another along the axis 3. The ends 4 support respective plates or brackets, which are coupled to a body (not shown) of the motor vehicle by means of springs 5, which are defined for example by leaf springs, and by means of shock absorbers devices 6, which are known and not described in detail. The ends 4 are connected to respective hubs 7 by means of respective support and connection members 8. The hubs 7 can rotate about respective rotation axes 9, which are parallel to one another and to the axis 3.

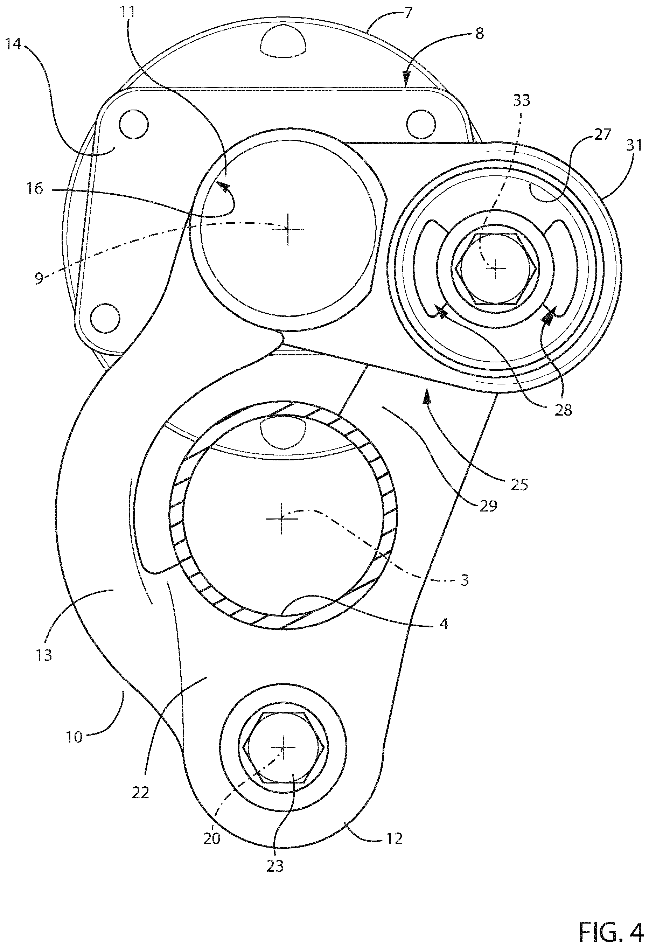

In particular, with reference to figure 4, the members 8 comprise respective connection brackets 10, each comprising, in turn, two end portions 11 and 12, which are opposite one another, and an intermediate arm 13, which is shaped so as to at least partially extend around the relative side end 4. In particular, the arm 13 is shaped like an arc, for example an arc of a circle.

In the example shown herein, the two members 8 preferably have identical shapes and sizes, so that they can be manufactured with the same die, namely using the same manufacturing tools and the same manufacturing process. At the same time, according to figure 1, the arrangement of the two members 8 needs to be adjusted to the right and left side of the suspension 1: in this specific case, the arm 13 of one of the members 8 is placed in front of the beam 2, whereas the arm 13 of the other one of the two members 8 is placed behind the beam 2 (taking into account the normal driving direction of the motor vehicle).

According to alternatives which are not shown herein, the members 8 have different shapes and sizes, so that they are both mounted in front of, or behind, the beam 2; and/or the brackets 10 could have the shape of a ring so as to extend around the ends 4 of the beam 2.

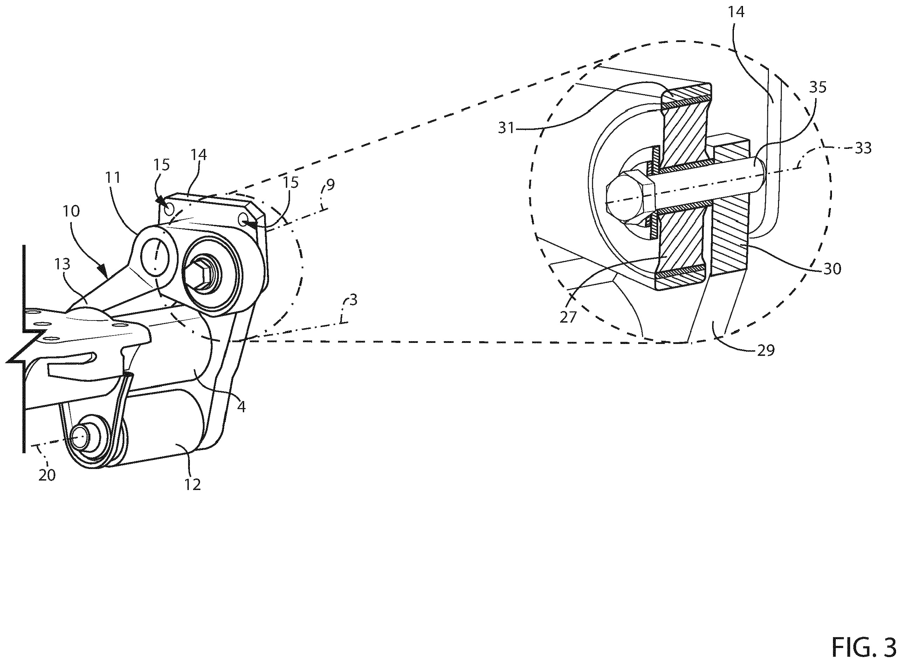

With reference to figures 3 and 4, for each member 8, the portion 11 is coaxial to the hub 7 along the axis 9 and axially ends with an attachment plate 14, which substantially extends on a plane orthogonal to the axis 9 and is provided with holes 15 for the fixing of elements (not shown) that are part of the braking system.

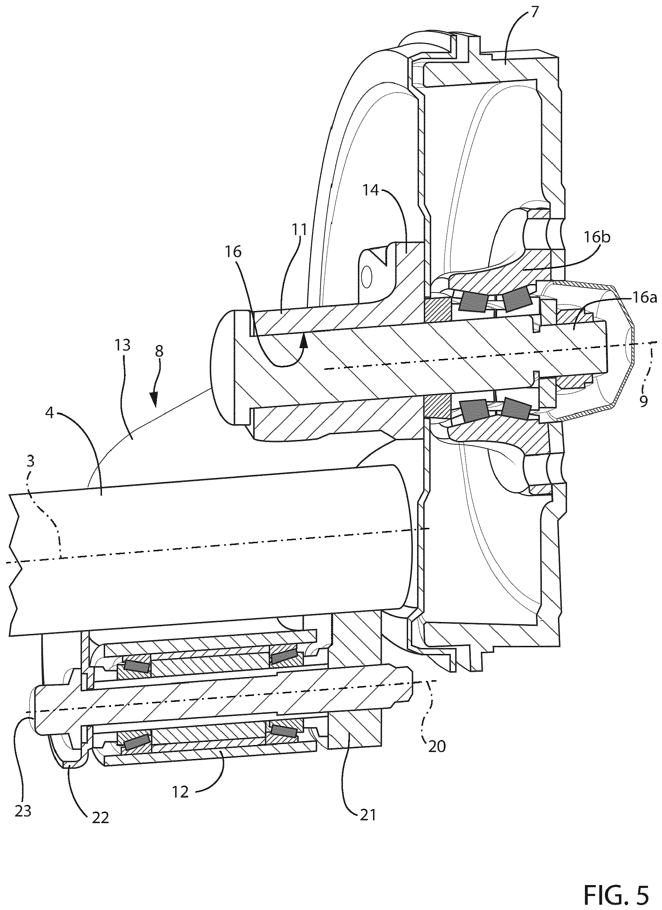

Preferably, according to figure 5, the portion 11 has a through hole 16, which extends along the axis 9, even through the plate 14, so as to fit a pin 16a, which supports the hub 7 by means of a suitable configuration of bearings 16b.

According to figure 1, the motor vehicle further comprises two rear wheels 17, which are mounted on the hubs 7 in positions that are fixed and coaxial to the hubs 7.

With reference to figure 4, according to the invention, the members 8 are coupled to the end 4 so as to oscillate relative to the beam 2 about respective oscillation axes 20. In other words, the portions 12 are hinged to the ends 4 of the beam 2 about the axes 20 so as to cause the members 8 to oscillate. Thanks to this oscillation possibility, the axes 9 are movable relative to the beam 2, so that the wheels 17 have one further degree of freedom relative to the body compared to known solutions. Furthermore, the axes 9 and/or the axes 20 can be placed, during the designing phase, in positions that are radially spaced apart from the axis 3, like in the case shown herein. In particular, the axes 9 and/or the axes 20 are parallel and radially spaced apart from the axis 3. More in particular, the axes 9 are higher than the axis 3, whereas the axes 20 are lower than the axis 3.

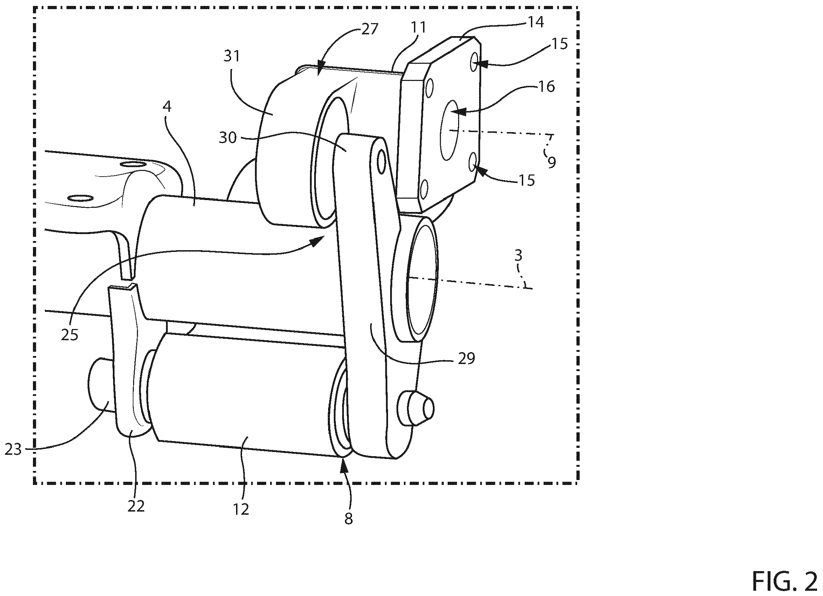

Preferably, according to figure 2, for each member 8, the portion 12 is defined by a sleeve or bushing arranged between two brackets 21 and 22, which are fixed relative to the corresponding end 4 (for example, they are fixed trough welding), radially project from said end 4 and are axially spaced apart from one another.

The portion 12 is hinged to the brackets 22 and 21, preferably by means of a pin 23 and one or more bearings (not shown) mounted between the pin 23 and the inner surface of the portion 12 with an arrangement that is such as to bear axial and not only radial loads. According to an alternative which is not shown herein, said bearings can be replaced by an elastic bushing, for example fitted into the member 8, with a twisting elasticity that is such as to ensure the oscillation of the member 8. Said bushing can also fulfil an oscillation dampening function and not only serve as a hinge.

The suspension 1, for each member 8, comprises a relative oscillation limiting device, indicated by number 25, which is interposed between the beam 2 and the member 8 so as to limit the oscillation thereof about the axis 20 within a maximum angular range in the neighbourhood of a reference angular position, in which the axes 20 and 9 are vertically aligned with one another (figure 4). By mere way of example, the oscillation can be of about 4° in one direction and in the other one, starting from said reference angular position.

In particular, the device 25 comprises at least one dampening element 27 to dampen the oscillations around the reference angular position. In the specific example shown herein, the dampening element 27 comprises a rubber or elastomer block, for instance having the shape of a bushing or a ring with two slits or openings 28, which are diametrically opposite one another along a circumferential direction about the axis 20.

In particular, according to figure 2, each device 25 comprises an arm 29, which is fixed to the beam 2 and ends with a constraint portion 30, which, for example, is radially spaced apart from the axis 3. More in particular, the arm 29 is part of the bracket 21. The device 25 comprises a constraint portion 31, which is part of the member 8 and, in particular, projects starting from the portion 11, in a radial manner relative to the axis 9.

With reference to figure 3, the portions 31 and 30 are aligned with one another along an axis 33, which is radially spaced apart from the axis 20 and parallel to the latter. The portions 30 and 31 are coupled to one another through the dampening element 27. In particular, the device 25 comprises a pin 35, which projects along the axis 33 from one of the portions 30 and 31 (specifically, from the portion 30). At the same time, the other one of the portions 30 and 31 (specifically, the portion 31) is shaped like an eyelet and has an inner surface, which is coupled to the pin 35 through the dampening element 27.

As already mentioned above, the oscillation of the member 8 about the axis 20 allows the plate 14 and, hence, the hub 7 and the wheel 17 to move back and forth relative to the aforesaid reference angular position, so as to help compensate and absorb, in a longitudinal direction (namely, along the driving direction of the motor vehicle), the road irregularities to which the wheel 17 is subjected, thus improving, on the overall, the feeling of comfort delivered to the driver and to passengers.

This phenomenon is particularly advantageous when the wheel 17 has to overcome a speed bump while driving or has to get onto a step while parking, namely when the wheel meets a relatively sudden obstacle with a relevant height.

Therefore, owing to the above, it is evident that the suspension 1 ensures the wheels 17 one additional degree of freedom in the longitudinal direction compared to known solution, where the rotation axes 9 are fixed relative to the beam 2. At the same time, the dampening elements 27 support the shock absorbing action aimed at dampening road irregularities.

The solution suggested herein is relatively small-sized and relatively light, despite having resistance features that are sufficient not to weaken the coupling of the wheels 17 to the ends 4 of the beam 2. In other words, the solution is, from the constructive point of view, a good compromise to be able to assign an oscillation axis to the wheels 17.

Finally, owing to the above, it is evident that the suspension 1 described with reference to the accompanying drawings can be subjected to changes and variations, which do not go beyond the scope of protection of the invention, as set forth in the appended claims.

In particular, the shape, the sizes, the position and the coupling mode of the member 8 could be different from the ones discussed above, for example in order to limit the distance between the axes 9 and 20 as much as possible (namely, in order to limit the extension of the protrusion of the beam 2 and of the brackets 21 and 22 under the axis 9 and, hence, have a height from the ground that is as large as possible for these components).

Furthermore, the ends of the beam 2 could be shaped differently, for example so as to integrate the brackets 21 and 22 and, hence, be able to directly hinge the members 8 to the ends without additional pieces; and/or the axes 20 could have a slight inclination instead of being perfectly parallel to the axes 9 and/or 3.

Finally, the concept of having hubs 7 that can oscillate relative to the beam 2 could also be applied to a twist-beam interconnected suspension, instead of a rigid-axle suspension like the one described above.

## Claims

1. An interconnected rear suspension, in particular a rigid-axle suspension, for a motor vehicle; the suspension (1) comprising:
- a beam (2) extending along a transverse axis (3) and having two end portions (4), which are opposite one another and are designed to be coupled to a motor vehicle body by means of respective spring elements;
- two hubs (7) having respective rotation axes (9);
- two support and connection members (8), which respectively couple said hubs (7) to said end portions (4) so as to allow the hubs (7) to rotate about said rotation axes (9);
**characterized in that** said support and connection members (8) are mounted on said end portions (4) so as to oscillate about respective oscillation axes (20), which are radially spaced apart from said rotation axes (9).

2. The suspension according to claim 1, **characterized in that** said oscillation axes (20) are parallel to said rotation axes (9).

3. The suspension according to claim 1 or 2, **characterized by** comprising, for each support and connection member (8), a respective oscillation limitation device (25) to limit the oscillation of the support and connection member (8) within a maximum angular range.

4. The suspension according to any one of the preceding claims, **characterized by** comprising, for each support and connection member (8), at least one dampening element (27) to dampen the oscillation of the support and connection member (8) relative to a reference angular position.

5. The suspension according to claims 3 and 4, **characterized in that** said dampening elements (27) are part of said oscillation limitation devices (25).

6. The suspension according to claim 5, **characterized in that** said dampening elements (27) comprise respective rubber or elastomer blocks.

7. The suspension according to claim 5 or 6, **characterized in that** each oscillation limitation device (25) comprises:
- a first constraint portion (30), which is fixed relative to the beam (2);
- a second constraint portion (31), which is part of the corresponding support and connection member (8);
- at least one dampening element (27), which couples said first and second constraint portions (30, 31) to one another in a position that is radially spaced apart from the corresponding oscillation axis (20).

8. The suspension according to claim 7, **characterized in that** each oscillation limitation device (25) further comprises a pin, which projects from one (30) of said first and second constraint portions; said dampening element comprising a bushing, which couples said pin to the other one (31) of said first and second constraint portions.

9. The suspension according to any one of the preceding claims, **characterized in that** said oscillation axes (20) are radially spaced apart from said transverse axis (3).

10. The suspension according to claim 9, **characterized in that** said oscillation axes (20) are parallel to said transverse axis (3).

11. The suspension according to claim 9 or 10, **characterized in that** said oscillation axes (20) are placed in a vertically lower position relative to said transverse axis (3).

12. The suspension according to any one of the preceding claims, **characterized in that** said rotation axes (9) are radially spaced apart from said transverse axis (3).

13. The suspension according to claim 12, **characterized in that** said rotation axes (9) are parallel to said transverse axis (3).

14. The suspension according to claim 12 or 13, **characterized in that** said rotation axes (9) are placed in a vertically higher position relative to said transverse axis (3).

15. The suspension according to any one of the preceding claims, **characterized in that** said support and connection members (8) have identical shapes and sizes.
